# EUROPÄISCHE PATENTSCHRIFT

(11) **EP 3 599 169 B1**
(45) Veröffentlichungstag und Bekanntmachung des Hinweises auf die Patenterteilung: **21.10.2020**
(21) Anmeldenummer: 19187224.1
(22) Anmeldetag: 19.07.2019
(51) Int. Cl.: B01D 46/42, B64D 13/06, B01D 46/24, B64G 1/48

(54) **MISCHERBAUGRUPPE MIT UMGEBENDEM FILTERELEMENT, STAURAUM MIT MISCHERBAUGRUPPE, FAHRZEUG MIT EINEM STAURAUM UND VERFAHREN ZUM EINBAU EINER MISCHERBAUGRUPPE**
MIXER MODULE WITH AMBIENT FILTER ELEMENT, STOWAGE AREA WITH A MIXER MODULE, VEHICLE COMPRISING A STOWAGE AREA AND METHOD FOR INSTALLING A MIXER MODULE
MODULE MÉLANGEUR POURVU D'UN ÉLÉMENT FILTRANT ENVIRONNANT, ESPACE DE RANGEMENT POURVU DU MODULE MÉLANGEUR, VÉHICULE DOTÉ D'UN ESPACE DE RANGEMENT ET PROCÉDÉ D'INSTALLATION D'UN MODULE MÉLANGEUR

(30) Priorität: 27.07.2018 DE 102018118198
(43) Veröffentlichungstag der Anmeldung: 29.01.2020
(73) Patentinhaber: Airbus Operations GmbH, 21129 Hamburg (DE)
(72) Erfinder: Lohmar, Jens, 21129 Hamburg (DE); Everth, Henning, 21129 Hamburg (DE); Braun, Felix, 21129 Hamburg (DE)

(56) Entgegenhaltungen:
- WO-A1-2016/045582
- JP-A- H06 316 297
- US-A- 3 893 829
- US-A1- 2001 049 927
- US-A1- 2004 231 350
- US-A1- 2015 064 061
- US-B2- 8 858 889
- US-B2- 10 023 317

## Beschreibung

Die Erfindung betrifft eine Mischerbaugruppe mit umgebendem Filterelement, einen Stauraum mit Mischerbaugruppe, ein Fahrzeug mit einem Stauraum und ein Verfahren zum Einbau einer Mischerbaugruppe. Insbesondere betrifft die Erfindung eine Mischerbaugruppe mit einem Filterelement, das einen eine Mischkammer umgebenden Zwischenraum mit einer Umgebung der Mischerbaugruppe fluidisch verbindet, sowie einen Stauraum mit solch einer Mischerbaugruppe und ein Flugzeug mit solch einem Stauraum. Ferner betrifft die Erfindung ein Verfahren zum schnellen Einbau einer Mischerbaugruppe in ein Flugzeug.

In herkömmlichen Flugzeugen ist eine Mischkammer zur Vermischung von Frischluft mit Rezirkulationsluft meist im Bauch des Flugzeugs untergebracht, wo die Rezirkulationsluft direkt abgesaugt und in die Mischkammer gefördert wird. Um ein möglichst gleichmäßiges Absaugen auf beiden Seiten des Flugzeugs zu gewährleisten und um eine Redundanz der Luftführungskomponenten zu schaffen, sind an der Mischkammer zwei Ansaugleitungen mit je einem Filterelement angeordnet.

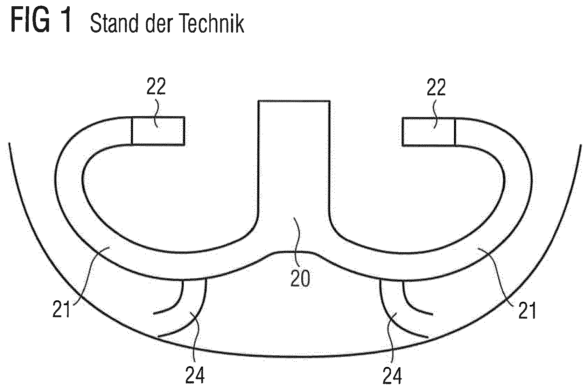

Figur 1 zeigt beispielhaft eine Ansicht einer herkömmlichen Mischkammer 20 mit zwei symmetrisch angeordneten Ansaugleitungen 21, an deren Enden jeweils ein Filterelement 22 angebracht ist. Die durch die Filterelemente 22 gereinigte Luft wird über die Ansaugleitungen 21 zum unteren Bereich der Mischkammer 20 geführt. Dort kann sie mit Frischluft aus Frischluftleitungen 24 vermischt werden. Im oberen Bereich wird die gemischte Luft den entsprechenden Mischluftleitungen zugeführt. Beispielsweise kann die gemischte Luft in eine Flugzeugkabine, ein Cockpit und/oder einen Frachtraum geführt werden.

Die Filterelemente 22 sind so in dem Raum des Flugzeugs angeordnet, dass sie einerseits leicht zugänglich sind, um einen Austausch zu erleichtern, und andererseits von beiden Seiten des Flugzeugraums Rezirkulationsluft aufnehmen, um eine gleichmäßige und symmetrische Rezirkulationsluftführung von der darüber angeordneten Passagierkabine zu ermöglichen.

US2015/064061 offenbart ein Filterelement und US 10023317, WO2016/045582 JPH 06 316297 offenbaren Mischerbaugruppen für Flugzeuge.

Der Erfindung liegt die Aufgabe zugrunde, eine kompakte Mischerbaugruppe bereitzustellen. Ferner liegt der Erfindung die Aufgabe zugrunde, einen Stauraum und ein Flugzeug mit solch einer Mischerbaugruppe sowie ein Verfahren zum einfachen Einbau einer Mischerbaugruppe bereitzustellen.

Diese Aufgabe wird durch eine Mischerbaugruppe mit den Merkmalen des Anspruchs 1, durch einen Stauraum mit den Merkmalen des Anspruchs 8, durch ein Fahrzeug mit den Merkmalen des Anspruchs 12 und einem Verfahren mit den Merkmalen des Anspruchs 13 gelöst.

Dieser schichtweise, zwiebelartige Aufbau führt zu einer sehr kompakten Mischerbaugruppe. Insbesondere der Verzicht auf gesonderte Ansaugleitungen, wie in herkömmlichen Systemen, erlaubt eine kompakte Mischerbaugruppe. Zudem übernimmt der Zwischenraum zwischen der Mischkammerwand und der Ummantelung die Funktion einer thermischen Isolierung der Mischkammer. Allein durch den zweischaligen Aufbau, aber auch durch das meist wärmere Fluid, das durch den Zwischenraum strömen kann, wird eine thermische Isolierung gegenüber einer Umgebung der Mischkammer erzielt. Daher kann auf zusätzliche Isolierelemente, wie sie bei herkömmlichen Mischkammern notwendig sind, verzichtet werden, wodurch der Aufbau der Mischerbaugruppe ebenfalls sehr kompakt ausfällt.

Ferner kann das Filterelement lösbar an der Mischerbaugruppe angeordnet sein. Die direkte Anordnung an einer Außenseite der Ummantelung ermöglicht eine weitere Reduzierung der Größe der Mischerbaugruppe. Zudem ist durch die Anordnung des Filterelements auf der Ummantelung sowie auf deren Öffnung/en ein effektiver Schallschutz gegeben. Das außenliegende Filterelement schluckt Schall sowohl aus dem Zwischenraum als auch aus der Mischkammer, wodurch keine zusätzlichen Schallschutzmaßnahmen erforderlich sind.

Auch kann die Mischerbaugruppe eine Vielzahl von Filterelementen umfassen. Die Filterelemente können dabei gemeinsam die Ummantelung bedecken, ohne dabei einander zu überlappen. Alternativ oder zusätzlich können die Filterelemente zumindest abschnittsweise einander überlappen und so ein mehrschichtiges Filterelement formen. Mehrere dünnere Filterelemente lassen sich leichter anbringen, insbesondere bei schwieriger zugänglichen Mischkammern, während ein einzelnes Filterelement schneller angebracht werden kann.

In einer weiteren Ausgestaltungsvariante der Mischerbaugruppe kann das Filterelement auf einer der Ummantelung zugewandten Seite eine Kontur aufweisen, die zumindest abschnittsweise mit einer Kontur einer Außenseite der Ummantelung korrespondiert. Diese formschlüssige Anordnung des Filterelements an der Ummantelung verhindert, dass Luft an dem Filterelement vorbei in den Zwischenraum strömen kann. Zudem kann das Filterelement an einer äußeren, der Ummantelung zugewandten Umrandung des Filterelements ein Dichtelement aufweisen, das an der Ummantelung anliegt. Dies verhindert ebenfalls ein Umströmen des Filterelements.

In noch einer weiteren Ausgestaltungsvariante kann die Mischerbaugruppe ferner eine Fördereinrichtung umfassen, die dazu eingerichtet ist, ein Fluid durch das Filterelement in den Zwischenraum und aus dem Zwischenraum in die Mischkammer zu fördern. Die Fördereinrichtung ist dabei so dimensioniert, dass sie einen ausreichenden Fluidvolumenstrom durch das Filterelement gewährleistet, um ausreichend Rezirkulationsluft der Mischkammer bereitzustellen. Zudem kann durch die Fördereinrichtung der Volumenstrom der Rezirkulationsluft geregelt werden. Alternativ kann die Mischerbaugruppe auch eine Vielzahl von Fördereinrichtungen umfassen, die jeweils dazu eingerichtet sind, ein Fluid durch das Filterelement in den Zwischenraum und aus dem Zwischenraum in die Mischkammer zu fördern.

Gemäß einer Variante ist die Fördereinrichtung in dem Zwischenraum angeordnet. So kann die Fördereinrichtung einen Volumenstrom innerhalb des Zwischenraums erzeugen. Ist der Zwischenraum gegenüber der Umgebung der Mischerbaugruppe mit Ausnahme der dem Filterelement zugewandten Öffnungen geschlossen, wird Fluid durch das Filterelement in den Zwischenraum gesaugt.

Optional kann das Fluid durch die Mischkammerwand in die Mischkammer gefördert werden. Hierfür kann die Mischkammerwand eine oder mehrere Öffnungen aufweisen, durch die das Fluid strömt. In einer Ausgestaltungsvariante ist die Fördereinrichtung vollständig zwischen Mischkammerwand und Ummantelung aufgenommen, wobei sich auf beiden Seiten der Fördereinrichtung (Einlassseite und Auslassseite) jeweils mindestens eine der Öffnungen in der Mischkammerwand und der Ummantelung befindet. Der Zwischenraum, vollständig oder zumindest ein Teil davon, wird quasi durch das Innere der Fördereinrichtung gebildet, wobei die Ummantelung der Halterung des Filterelements dient oder auch weggelassen werden kann. Für gewöhnlich ist aber eine effektive Filterquerschnittsfläche notwendig, die größer als eine Fläche des Fördereinrichtungsquerschnitts ist, um ein störungsfreies Filtern des Fluids zu gewährleisten.

Ebenfalls optional kann auf der Auslassseite der Fördereinrichtung und/oder in/an der Mischkammerwand ein Rückschlagventil angeordnet sein. Dies verhindert, dass Fluid aus der Mischkammer in den Zwischenraum und/oder die Fördereinrichtung strömt, anstatt zum Auslass der Mischkammer.

Alternativ oder zusätzlich kann die Mischerbaugruppe ferner einen Vormischer umfassen, der mit dem Einlass der Mischkammer fluidisch gekoppelt ist. Dabei kann die Fördereinrichtung das Fluid aus dem Zwischenraum in den Vormischer fördern. In dem Vormischer kann das Fluid mit einem anderen Fluidstrom zusammengeführt werden. Optional kann der Vormischer eine Entnahmeöffnung aufweisen, um vorgemischtes Fluid vor Einströmen in die Mischkammer zu entnehmen (bspw. zur Weiterleitung in priorisierte Bereiche des Flugzeugs (z.B. das Cockpit oder luftverbrauchende Geräte).

In einer anderen Ausgestaltungsvariante der Mischerbaugruppe kann diese ferner eine Frischluftzufuhrleitung umfassen, die mit dem Einlass der Mischkammer fluidisch gekoppelt ist. Die Frischluftleitung kann Frischluft von einem Klimapack (bspw. einer Flugzeugklimaanlage) bereitstellen. In der Mischkammer kann anschließend die Frischluft mit der Rezirkulationsluft gemischt werden, wobei das Verhältnis der beiden Luftströme verschiedenen Parametern genügt. Hierzu zählen nur beispielhaft Temperatur, Feuchtigkeit und Minimumfrischluftzufuhr pro Passagier.

Gemäß einem weiteren Aspekt umfasst ein Stauraum in einem Fahrzeug eine Mischerbaugruppe gemäß dem ersten Aspekt oder einer der beschriebenen Ausgestaltungsvarianten. Bei dem Stauraum kann es sich um einen Raum im Bauch eines Flugzeugs handeln, beispielsweise im unteren Rumpf, an den Flügelwurzeln und/oder in der Nähe eines Klimapacks des Flugzeugs. Der Stauraum verfügt über Zuleitungen mit Rezirkulationsluft oder ist in anderer Weise mit einem Bereich des Flugzeugs (bspw. einer Passagierkabine) fluidisch gekoppelt (z.B. über DADO-Panels), um Rezirkulationsluft in den Stauraum zu leiten und anschließend durch das Filterelement der Mischerbaugruppe aufzunehmen (einzusaugen).

In einer Ausgestaltungsvariante kann der Stauraum ferner eine Trennwand umfassen, die den die Mischerbaugruppe enthaltenden Stauraum von einem Frachtraum trennt. Die Trennwand dient einer Abschottung des Frachtraums von anderen Bereichen des Flugzeugs. Optional kann die Trennwand mindestens eine Filtereinbauöffnung aufweisen. Dabei kann das Filterelement dazu eingerichtet sein, durch die Filtereinbauöffnung geschoben zu werden und in einer Endposition den Zwischenraum mit der Umgebung der Mischerbaugruppe fluidisch zu verbinden und die Filtereinbauöffnung fluidisch abzudichten. Mit anderen Worten sind die Trennwand und die Mischerbaugruppe so zu einander angeordnet, dass das Filterelement von dem Frachtraum aus in eine Einbauposition (Endposition) innerhalb der Mischerbaugruppe gebracht werden kann, in der das Filterelement die in die Mischkammer geförderte Rezirkulationsluft filtert.

Das Filterelement kann ferner ein Abschlusselement aufweisen, das in der Filtereinbauöffnung zumindest abschnittsweise aufgenommen werden kann. Beispielsweise kann das Abschlusselement einen Abschnitt aufweisen, dessen Form der Filtereinbauöffnung entspricht. Dadurch kann das Filterelement die Filtereinbauöffnung vollständig verschließen. Entweder passt das Abschlusselement in die Filtereinbauöffnung, wobei das Abschlusselement bündig mit der Trennwand abschließt (also in einer Ebene liegt), oder deckt die Filtereinbauöffnung vollständig ab, wobei ein Teil des Abschlusselements auf der Trennwand aufliegt und somit von dieser absteht (senkrecht zur Trennwandebene betrachtet).

Optional kann das Filterelement oder die Trennwand (an der Filtereinbauöffnung) ein Dichtelement aufweisen, um eine fluidische Abdichtung zwischen Frachtraum und Stauraum zu gewährleisten. Beispielsweise muss ein Frachtraum gegenüber anderen Bereichen des Flugzeugs so abgedichtet sein, dass keine gefährlichen Stoffe (Rauch, Gase, etc.) aus dem Frachtraum entweichen und andere Bereiche (bspw. Passagierkabine, Cockpit, etc.) erreichen können.

In einer weiteren Ausgestaltungsvariante weist das Abschlusselement eine Verriegelungseinrichtung auf, die dazu eingerichtet ist, das Abschlusselement an der Trennwand so zu verriegeln, dass das Filterelement in seiner Endposition fixiert ist. Dadurch kann das Abschlusselement auch in der Position gehalten werden, in der es die Filtereinbauöffnung und somit den Frachtraum abdichtet.

Gemäß einem weiteren Aspekt umfasst ein Fahrzeug einen Stauraum gemäß obigem Aspekt oder einer der zugehörigen Ausgestaltungsvarianten. Bei dem Fahrzeug kann es sich um jedes Fahrzeug handeln, das mit einer Lüftungs-/Klimaanlage mit Rezirkulationsluftmischung ausgestattet ist. Beispielsweise kann es sich bei dem Fahrzeug um ein Flugzeug handeln.

Gemäß einem noch weiteren Aspekt umfasst ein Verfahren zum Herstellen einer Mischerbaugruppe in einem Flugzeug folgende Schritte: Bereitstellen einer Mischkammer, die eine die Mischkammer begrenzende Mischkammerwand umfasst; Anbringen einer Ummantelung, die die Mischkammerwand zumindest abschnittsweise umgibt und einen Zwischenraum zwischen der Mischkammerwand und der Ummantelung begrenzt; Anbringen eines Filterelements an einer Außenseite der Ummantelung, wobei das Filterelement den Zwischenraum mit einer Umgebung der Mischerbaugruppe fluidisch verbindet, und wobei der Zwischenraum mit der Mischkammer fluidisch verbunden ist; Einbringen der Mischerbaugruppe mit angebrachter Ummantelung und Filterelement in einen Stauraum des Flugzeugs; und Befestigen der Mischerbaugruppe in dem Stauraum.

Dabei ist es möglich, die Mischerbaugruppe einschließlich Filterelement außerhalb des Flugzeugs vorzufertigen, und die vorgefertigte Mischerbaugruppe in den Stauraum des Flugzeugs einzubauen. Dadurch wird der Einbau einer Mischerbaugruppe in ein Fahrzeug deutlich beschleunigt, da der Zusammenbau (Herstellen) der Mischerbaugruppe außerhalb des Fahrzeugs erfolgen kann. Ferner kann der üblicherweise den Zusammenbau verzögernde Platzmangel in dem Stauraum des Fahrzeugs während der Einbauphase der Mischerbaugruppe vermieden werden. Zudem ist auch der Zusammenbau schneller, da keine gesonderten Ansaugleitungen in dem Stauraum verlegt werden müssen.

Das Anbringen der Ummantelung kann auch in einem Herstellschritt der Mischkammer erfolgen. Beispielsweise können Mischkammerwand und Ummantelung in einem Schritt produziert werden. Hierfür eignen sich Spritzverfahren, Ziehverfahren, 3D-Druckverfahren oder ähnliches, wobei zwei parallele (oder konzentrische) Wandungen gleichzeitig geformt werden können.

In einer Variante umfasst das Verfahren des Weiteren ein Entfernen des Filterelements von der Mischerbaugruppe; und Anbringen eines neuen Filterelements an der Außenseite der Ummantelung. Diese Schritte können ohne Ausbau anderer Bestandteile der Mischerbaugruppe erfolgen. Dieses Auswechseln des Filterelements muss für gewöhnlich in regelmäßigen Abständen erfolgen und kann aufgrund der Anordnung des Filterelements an der Mischkammer besonders schnell durchgeführt werden. Das außen an der Mischkammer anliegende Filterelement kann leicht und schnell gelöst werden und durch ein neues Filterelement ersetzt werden.

Die hier beschriebenen Ausgestaltungen, Varianten und Aspekte können ferner beliebig kombiniert werden, sodass weitere nicht explizit beschriebene Ausgestaltungsvarianten in der vorliegenden Offenbarung umfasst sind.

Nachfolgend werden Ausführungsbeispiele der Erfindung anhand der Zeichnungen näher beschrieben.
- Figur 1: zeigt schematisch eine konventionelle Mischkammer mit weiteren Lüftungskomponenten,
- Figur 2: zeigt schematisch eine perspektivische Ansicht einer Mischerbaugruppe,
- Figur 3: zeigt schematisch eine Aufsicht auf ein Filterelement einer Mischerbaugruppe,
- Figur 4: zeigt schematisch einen Querschnitt längs durch eine Mischerbaugruppe,
- Figur 5: zeigt schematisch einen Teilausschnitt eines Querschnitts längs durch eine Mischerbaugruppe gemäß einer Ausgestaltungsvariante,
- Figur 6: zeigt schematisch eine Ansicht einer Mischerbaugruppe gemäß einer weiteren Ausgestaltungsvariante,
- Figur 7: zeigt schematisch eine Seitenansicht der Mischerbaugruppe aus Figur 6,
- Figur 8: zeigt schematisch ein Fahrzeug mit einer Mischerbaugruppe, und
- Figur 9: zeigt ein Ablaufdiagramm eines Verfahrens zum Herstellen einer Mischerbaugruppe.

Gemäß der vorliegenden Erfindung wird eine Mischerbaugruppe mit einer Mischkammerwand und einer die Mischkammerwand umgebenden Ummantelung beschrieben, wobei ein Filterelement einen Zwischenraum zwischen der Mischkammerwand und der Ummantelung mit einer Umgebung der Mischerbaugruppe fluidisch verbindet und der Zwischenraum fluidisch mit der Mischkammer verbunden ist. Ferner wird ein Stauraum mit solch einer Mischerbaugruppe, ein Fahrzeug mit solch einer Stauraum und ein Verfahren zum Herstellen einer Mischerbaugruppe beschrieben.

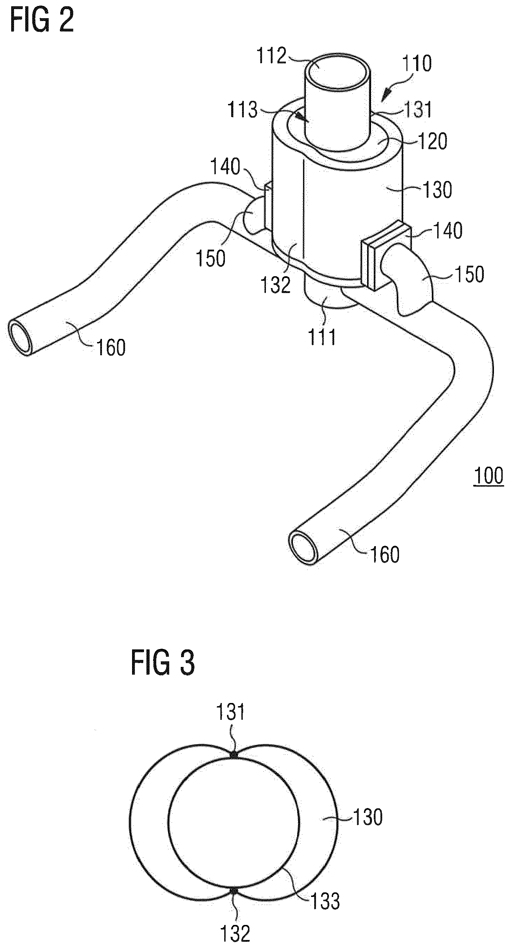

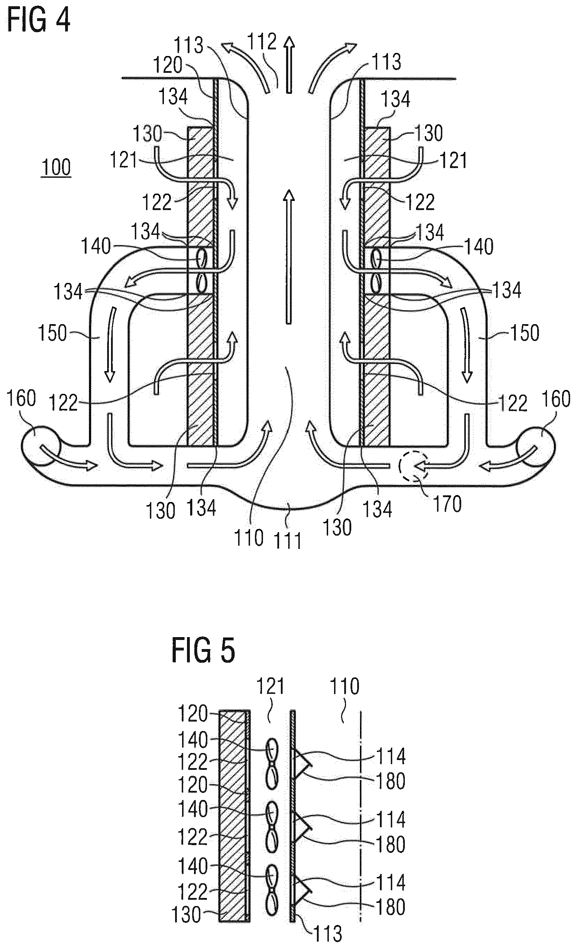

Figur 2 zeigt schematisch eine perspektivische Ansicht einer Mischerbaugruppe 100, während Figur 4 einen schematischen Querschnitt längs durch eine Mischerbaugruppe 100 zeigt. Die Mischerbaugruppe 100 umfasst eine Mischkammer 110, die mindestens einen Einlass 111 und mindestens einen Auslass 112 und eine dazwischenliegende die Mischkammer 110 begrenzende Mischkammerwand 113 aufweist. Die Mischkammer 110 wird sowohl von einer Ummantelung 120 als auch einem Filterelement 130 umgeben.

Wie anhand der Figur 4 erkennbar ist, ist die Mischkammerwand 113 zumindest abschnittsweise von der Ummantelung 120 umgeben, wobei die Ummantelung 120 einen Zwischenraum 121 zwischen der Mischkammerwand 113 und der Ummantelung 120 begrenzt. Der Zwischenraum 121 kann von einem Fluid (beispielsweise Luft) durchströmt werden. Das außen auf der Ummantelung 120 aufgebrachte Filterelement 130 verbindet dabei den Zwischenraum 121 mit einer Umgebung der Mischerbaugruppe 100 fluidisch. Beispielsweise kann das Filterelement 130 auf der Ummantelung 120 aufliegen und dabei eine Öffnung 122 in der Ummantelung 120 bedecken. In Figur 4 ist lediglich beispielhaft eine einzelne Öffnung 122 pro dargestelltem Abschnitt des Filterelements 130 gezeigt. Selbstverständlich können mehr Öffnungen 122 vorhanden sein. Auch ist die vorliegende Offenbarung auch nicht auf die dargestellte Größe der Öffnungen 122 begrenzt. Beispielsweise kann die Ummantelung 120 auch zumindest abschnittsweise aus einem Lochblech bestehen, wodurch die Ummantelung 120 kostengünstig herstellbar ist.

Das Filterelement 130 ist lösbar an der Mischerbaugruppe 100 und an der Ummantelung 120 anliegend angeordnet. Hierfür kann, wie dies aus der in Figur 3 gezeigten schematischen Aufsicht des Filterelements 130 ersichtlich ist, das Filterelement 130 mehrteilig ausgestaltet sein. Beispielsweise kann das Filterelement 130 aus zwei halbrunden Teilen bestehen, die an einem Gelenk 131 drehbar miteinander gekoppelt sind. Das Gelenk 131 kann aus mehreren Gelenken bestehen oder auch aus einem Klavierband. Auf der gegenüberliegenden Seite sind die beiden Teile des Filterelements 130 durch ein Verschlusselement 132 miteinander verbunden. Das Verschlusselement 132 kann sehr einfach durch Ösen oder andere Öffnungen an jedem der beiden Filterelementteile und einem in die Ösen oder andere Öffnungen eingeführten Verriegelungsbolzen ausgeführt sein. Ebenso ist es möglich, dass das Verschlusselement 132 zumindest teilweise aus einem Klettverschluss besteht.

Das Filterelement 130 weist auf der der Ummantelung 120 zugewandten Seite (innenseitig) eine Kontur 133 auf, die zumindest abschnittsweise mit einer Kontur einer Außenseite der Ummantelung 120 korrespondiert. Dadurch wird ein festes Anliegen des Filterelements 130 auf der Ummantelung 120 erzielt, welches wiederum verhindert, dass ein Fluid zwischen dem Filterelement 130 und der Ummantelung 120 eingesaugt wird und dabei das Filterelement 130 umgeht. Beispielsweise kann der Querschnitt des angebrachten Filterelements innenseitig (also die Kontur 133) kreisförmig sein und ebenso der Querschnitt der Ummantelung 120 kreisförmig mit gleichem Durchmesser sein.

Zusätzlich kann mindestens ein Dichtelement 134 an dem Filterelement 130 oder an der Umwandlung 120 angeordnet sein, welches an einer äußeren Umrandung des Filterelements 130 einen Schlitz zwischen Filterelement 130 und der Ummantelung 120 abdichtet. Dadurch wird gewährleistet, dass kein Fluid zwischen dem Filterelement 130 und der Ummantelung 120 eingesaugt wird und dabei das Filterelement umgehen könnte.

Wie den Strömungspfeilen aus Figur 4 entnommen werden kann, wird mittels einer Fördereinrichtung 140 ein Fluid, beispielsweise Rezirkulationsluft in der Umgebung der Mischerbaugruppe 100, durch das Filterelement 130 in den Zwischenraum 121 (durch die Öffnungen 122) und aus dem Zwischenraum 121 in die Mischkammer 110 gefördert. Mit anderen Worten saugt die Fördereinrichtung 140 das Fluid aus dem Zwischenraum 121, sodass Fluid aus der Umgebung der Mischerbaugruppe 100 durch das Filterelement 130 und die Öffnungen 122 nachströmt.

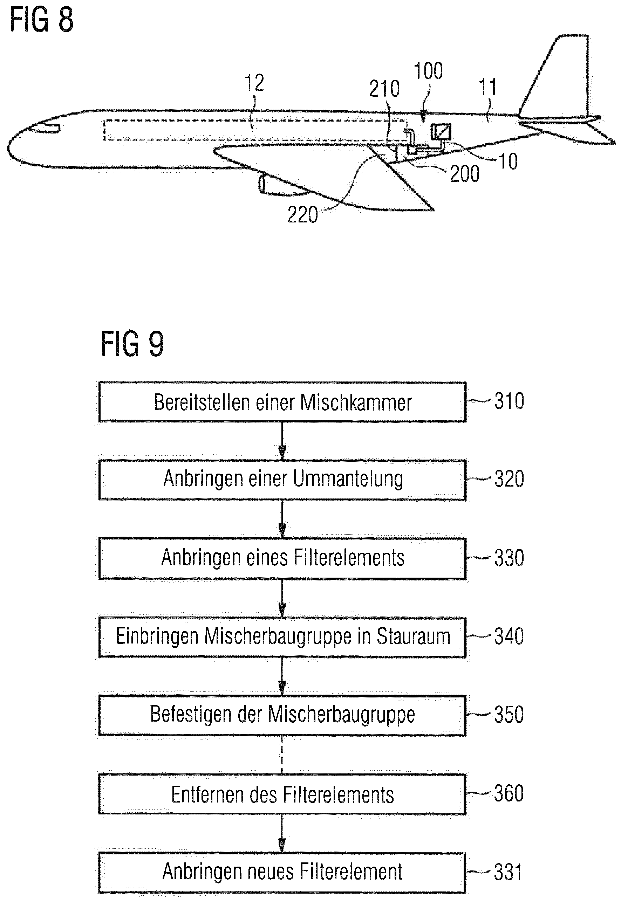

Das so gefilterte Fluid wird gemäß der Ausgestaltung aus Figur 4 durch die Fördereinrichtung 140 über einen Vormischer 150, der mit dem Einlass 111 der Mischkammer 110 fluidisch gekoppelt ist, weitergeleitet. Der Vormischer 150 kann die so geförderte Rezirkulationsluft mit Frischluft aus einer Frischluftleitung 160 vormischen, bevor beide Luftströme über den Einlass 111 in die Mischkammer 110 gelangen. Nach der vollständigen Durchmischung in der Mischkammer 110 wird der gemischte Luftstrom über den Auslass 112 in Bereiche des Fahrzeugs geleitet, die mit Frischluft versorgt werden müssen, wie zum Beispiel eine Passagierkabine 12 (siehe Figur 8). Hierbei kann der Auslass 112 der Mischkammer 110 an ein übliches Leitungssystem eines Fahrzeugs angeschlossen werden, weshalb dieses hier nicht abgebildet und nicht weiter beschrieben wird.

Von dem Vormischer 150 kann ein vorgemischter Luftstrom über einen entsprechenden Anschluss 170 abgeführt werden. Beispielsweise können spezielle Bereiche, welche sich durch gesonderte Anforderungen an die Zuluftverteilung auszeichnen (z.B. thermische Anforderungen oder besondere Bedarfe bezüglich des Frischluft- / Rezirkulationsluftverhältnisses) wie z.B. ein Cockpit, mit diesem Luftstrom versorgt werden.

Figur 5 zeigt schematisch einen Teilausschnitt eines Querschnitts längs durch eine Mischerbaugruppe 100 gemäß einer Ausgestaltungsvariante. In dieser Variante ist die Fördereinrichtung 140 in dem Zwischenraum 121 angeordnet. Dadurch kann das Fluid durch die Mischkammerwand 113 in die Mischkammer 110 gefördert werden, ohne einen Vormischer 150 (siehe Figur 4) zu passieren. Die Fördereinrichtung 140 oder mehrere Fördereinrichtungen 140 kann/können (jeweils) vor einer Öffnung 114 in der Mischkammerwand 113 angeordnet sein. Die Öffnung/en 122 in der Ummantelung 120 können den Öffnungen 114 der Mischkammerwand 113 gegenüberliegen, sodass die eine oder mehṙeren Fördereinrichtungen 140 zwischen diesen beiden Öffnungen 122, 114 liegen können. Alternativ können in Längsrichtung der Mischkammer 110 die Öffnungen 122, 114 auch versetzt zueinander angeordnet sein, wie dies in Figur 5 gezeigt ist. Dies ermöglicht eine zumindest teilweise Vermischung der Ströme gefilterten Fluids innerhalb des Zwischenraums 120.

Der übrige Aufbau der Mischerbaugruppe 100 entspricht dem in Figur 4 gezeigten Aufbau und wird daher nicht weiter erläutert. Da über den Einlass 111 auch ein Fluid einer anderen Quelle (beispielsweise Frischluft über Frischluftleitung 160) in die Mischkammer 110 geleitet wird, verhindern Rückschlagventile 180 ein Austreten der Frischluft aus der Mischkammer 110 in Richtung Fördereinrichtung 140 und Filterelement 130.

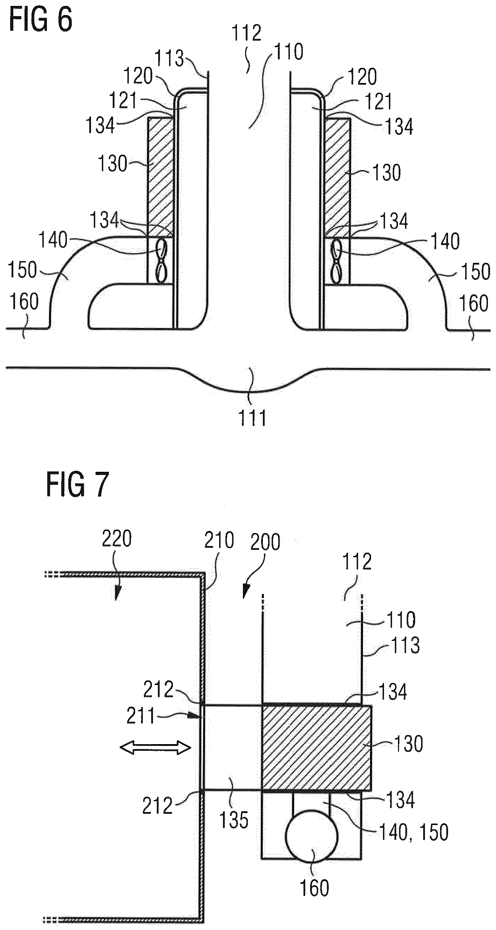

Figur 6 zeigt schematisch eine Ansicht einer Mischerbaugruppe 100 gemäß einer weiteren Ausgestaltungsvariante. Die in Figur 6 dargestellte Ansicht zeigt einen Querschnitt durch die Mischerbaugruppe 100 ähnlich zu Figur 4. Im Unterschied zu der in den Figuren 2 und 3 gezeigten Variante, ist das Filterelement 130 rechteckig ausgestaltet, weist also keine Krümmungen auf. Auch die Ummantelung 120 ist entsprechend dem Filterelement 130 zumindest in dem Bereich, in dem das Filterelement 130 anliegt, gerade. Dies erlaubt ein einfacheres Entnehmen des Filterelements, da es wie eine Schublade herausgezogen werden kann. Auch hier kann ein Abdichtelement 134 vorgesehen sein, um das Filterelement 130 fluiddicht auf der Ummantelung 120 anzuordnen.

Figur 7 zeigt schematisch eine Seitenansicht der Mischerbaugruppe 100 aus Figur 6. Hier ist die Anordnung der Mischerbaugruppe 100 in einem Stauraum 200 des Fahrzeugs 11 dargestellt. Der Stauraum 200 wird durch eine Trennwand 210 von einem Frachtraum 220 getrennt. In der Trennwand 210 ist jeweils eine Filtereinbauöffnung 211 vorgesehen, durch die eines der Filterelemente 130 ein- und ausgeschoben werden kann. Das vollständig eingeschobene Filterelement 130 kann in seiner Endposition den Zwischenraum 121 mit der Umgebung der Mischerbaugruppe 100 fluidisch verbinden und gleichzeitig die Filtereinbauöffnung 211 fluidisch abdichten. Durch entsprechende Führungselemente (nicht dargestellt) kann das Filterelement 130 zu seiner Endposition geführt werden. Beispielsweise können hierfür Schienen oder andere Gleitvorrichtungen vorgesehen sein, um die "Schubladenfunktion" zu bewerkstelligen.

Um den Frachtraum fluidisch abzudichten, selbst wenn die Filterelemente 130 eingeführt sind, kann ein weiteres Abdichtelement 212 vorgesehen sein. Dieses kann beispielsweise entlang einer Kante der Filtereinbauöffnung 211 angeordnet sein und/oder entlang einer entsprechenden Kante oder Seite eines Abschlusselements 135 des Filterelements 130. Das Abschlusselement 135 weist eine Form auf, die einer Form der Filtereinbauöffnung 211 entspricht. Dadurch kann das Abschlusselement 135 bündig mit der Trennwand 210 angeordnet sein, wenn das Filterelement 130 seine Endposition (Einsatzposition an der Ummantelung 120) erreicht hat. Alternativ kann das Abschlusselement 135 die Filtereinbauöffnung 211 vollständig überdecken und eine Art Deckel (nicht dargestellt) aufweisen, der eine größere Form als die Filtereinbauöffnung 211 hat.

Diese Anordnung ermöglicht einen schnellen Austausch der Filterelemente 130 von dem Frachtraum 220 aus, ohne einen gesonderten Zugang für entsprechendes Servicepersonal in den Stauraum 210 öffnen zu müssen. Dadurch wird ein Wechsel der Filterelemente 130 nicht nur einfacher, sondern auch kostengünstiger erfolgen.

Figur 8 zeigt schematisch ein Fahrzeug 11 mit einer Mischerbaugruppe 100. Die Mischerbaugruppe 100 kann in einem Stauraum 200 angeordnet sein, der über eine Trennwand 210 von einem Frachtraum 220 getrennt ist. Die Mischerbaugruppe 100 dient der Vermischung zweier Luftströme in einem Lüftungssystem 10, wobei die beiden vermischten Luftströme einem Bereich des Fahrzeugs 11, beispielsweise einer Passagierkabine 12, zugeführt werden kann.

Figur 9 zeigt ein Ablaufdiagramm eines Verfahrens zum Herstellen einer Mischerbaugruppe 100. In einem ersten Schritt 310 wird eine Mischkammer 110 bereitgestellt, und anschließend in Schritt 320 eine Ummantelung 120 angebracht, die die Mischkammerwand 113 zumindest abschnittsweise umgibt. Das Anbringen 320 der Ummantelung 120 kann auch ein Integrieren der Ummantelung 120 mit der Mischkammer 110 umfassen. Mit anderen Worten kann die Ummantelung 120 einstückig mit der Mischkammer 110 hergestellt werden. Danach kann das Filterelement 130 an einer Außenseite der Ummantelung 120 in Schritt 330 angebracht werden. Dabei wird das Filterelement 130 den Zwischenraum 121 mit einer Umgebung der Mischerbaugruppe 100 fluidisch verbinden, wie es in Bezug auf die Figuren 2 bis 7 beschrieben ist.

Die so vorgefertigte Mischerbaugruppe 100 kann in einem Endfertigungsprozess des Flugzeugs 11, beispielsweise in der Final Assembly Line (FAL), in einen Stauraum 200 des Flugzeugs 11 eingebracht werden (Schritt 340). Anschließend kann die Mischerbaugruppe 100 mit bereits angebrachter Ummantelung 120 in dem Stauraum 200 in Schritt 350 befestigt werden. Optional kann auch bereits das Filterelement 130 angebracht sein, wenn die Mischerbaugruppe 100 in den Stauraum 200 eingebracht und dort befestigt wird. Das Filterelement 130 kann auch erst nach Befestigung der Mischerbaugruppe 100 in dem Stauraum 200 auf/an der Mischerbaugruppe 100 angeordnet werden.

Nicht nur der so gestaltete Einbau einer Mischerbaugruppe 100 ist besonders schnell und einfach, sondern auch der Wechsel des Filterelements 130 einer solchen Mischerbaugruppe 100. So kann in einem weiteren Schritt 360 das Filterelement 130 von der Mischerbaugruppe 100 entfernt werden, während die übrige Mischerbaugruppe in dem Stauraum 200 des Flugzeugs 11 verbleibt. Anschließend kann in Schritt 331 ein neues Filterelement 130 an der Außenseite der Ummantelung 120 angebracht werden. Dies kann entweder durch Umhüllen der Ummantelung 120 mit einem Filterelement 130 gemäß Figuren 2 und 3 oder durch Einschieben eines Filterelements 130 gemäß Figuren 6 und 7 erfolgen.

Die voranstehend erörterten Varianten, Ausgestaltungen und Ausführungsbeispiele dienen lediglich zur Beschreibung der beanspruchten Lehre, schränken diese jedoch nicht auf die Varianten, Ausgestaltungen und Ausführungsbeispiele ein.

## Patentansprüche

1. Mischerbaugruppe (100) zur Vermischung zweier Luftströme in einem Lüftungssystem (10), wobei die Mischerbaugruppe (100) umfasst:
- eine Mischkammer (110), die einen Einlass (111) und einen Auslass (112) und eine die Mischkammer (110) begrenzende Mischkammerwand (113) umfasst;
- eine die Mischkammerwand (113) zumindest abschnittsweise umgebende Ummantelung (120), wobei die Ummantelung (120) einen Zwischenraum (121) zwischen der Mischkammerwand (113) und der Ummantelung (120) begrenzt und eine oder mehrere Öffnungen (122) aufweist; und
- ein Filterelement (130), das an einer Außenseite der Ummantelung (120) anliegend angeordnet ist und die eine oder mehreren Öffnungen (122) der Ummantelung (120) bedeckt,
wobei das Filterelement (130) den Zwischenraum (121) mit einer Umgebung der Mischerbaugruppe (100) fluidisch verbindet, indem Fluid durch das Filterelement unmittelbar durch diese eine oder mehreren Öffnungen in den Zwischenraum strömen kann, und
wobei der Zwischenraum (121) mit der Mischkammer (110) fluidisch verbunden ist.

2. Mischerbaugruppe (100) gemäß Anspruch 1, wobei das Filterelement (130) lösbar an der Mischerbaugruppe (100) angeordnet ist.

3. Mischerbaugruppe (100) gemäß Anspruch 2, wobei das Filterelement (130) auf einer der Ummantelung (120) zugewandten Seite eine Kontur aufweist, die zumindest abschnittsweise mit einer Kontur einer Außenseite der Ummantelung (120) korrespondiert.

4. Mischerbaugruppe (100) gemäß einem der Ansprüche 1 bis 3, ferner umfassend:
- eine Fördereinrichtung (140), die dazu eingerichtet ist, ein Fluid durch das Filterelement (130) in den Zwischenraum (121) und aus dem Zwischenraum (121) in die Mischkammer (110) zu fördern.

5. Mischerbaugruppe (100) gemäß Anspruch 4, wobei die Fördereinrichtung (140) in dem Zwischenraum (121) angeordnet ist und das Fluid durch die Mischkammerwand (113) in die Mischkammer (110) fördert.

6. Mischerbaugruppe (100) gemäß Anspruch 4, ferner umfassend:
- einen Vormischer (150), der mit dem Einlass (111) der Mischkammer (110) fluidisch gekoppelt ist,
wobei die Fördereinrichtung (140) das Fluid aus dem Zwischenraum (120) in den Vormischer (150) fördert.

7. Mischerbaugruppe (100) gemäß einem der Ansprüche 1 bis 6, ferner umfassend:
- eine Frischluftzufuhrleitung (160), die mit dem Einlass (111) der Mischkammer (110) fluidisch gekoppelt ist.

8. Stauraum (200) in einem Fahrzeug (11), wobei der Stauraum (200) umfasst:
- eine Mischerbaugruppe (100) gemäß einem der Ansprüche 1 bis 7.

9. Stauraum (200) gemäß Anspruch 8, ferner umfassend:
- eine Trennwand (210), die den die Mischerbaugruppe (100) enthaltenden Stauraum (200) von einem Frachtraum (220) trennt und mindestens eine Filtereinbauöffnung (211) aufweist,
wobei das Filterelement (130) dazu eingerichtet ist, durch die Filtereinbauöffnung (211) geschoben zu werden und in einer Endposition den Zwischenraum (121) mit der Umgebung der Mischerbaugruppe (100) fluidisch zu verbinden und die Filtereinbauöffnung (211) fluidisch abzudichten.

10. Stauraum (200) gemäß Anspruch 9, ferner umfassend:
- ein Abschlusselement (135), das dazu eingerichtet ist, die Filtereinbauöffnung (211) fluidisch abzudichten.

11. Stauraum (200) gemäß Anspruch 10, wobei das Abschlusselement (135) eine Form aufweist, die einer Form der Filtereinbauöffnung (211) entspricht oder die Filtereinbauöffnung (211) vollständig überdeckt.

12. Flugzeug (11) mit einem Stauraum (200) gemäß einem der Ansprüche 8 bis 11.

13. Verfahren zum Herstellen einer Mischerbaugruppe (100) in einem Flugzeug (11), wobei das Verfahren umfasst:
Bereitstellen (310) einer Mischkammer (110), die eine die Mischkammer (110) begrenzende Mischkammerwand (113) umfasst;
Anbringen (320) einer Ummantelung (120), die die Mischkammerwand (113) zumindest abschnittsweise umgibt, einen Zwischenraum (121) zwischen der Mischkammerwand (113) und der Ummantelung (120) begrenzt und eine oder mehrere Öffnungen (122) aufweist, wobei der Zwischenraum (121) mit der Mischkammer (110) fluidisch verbunden ist;
Anbringen (330) eines Filterelements (130) an einer Außenseite der Ummantelung (120), wobei das Filterelement (130) die eine oder mehreren Öffnungen (122) der Ummantelung (120) bedeckt und den Zwischenraum (121) mit einer Umgebung der Mischerbaugruppe (100) fluidisch verbindet, indem Fluid durch das Filterelement unmittelbar durch diese eine oder mehreren Öffnungen in den Zwischenraum strömen kann, und;
Einbringen (340) der Mischerbaugruppe (100) mit angebrachter Ummantelung (120) und Filterelement (130) in einen Stauraum (200) des Flugzeugs (11); und Befestigen (350) der Mischerbaugruppe (100) in dem Stauraum (200).

14. Verfahren gemäß Anspruch 13, des Weiteren umfassend:
Entfernen (360) des Filterelements (130) von der Mischerbaugruppe (100); und
Anbringen (331) eines neuen Filterelements (130) an der Außenseite der Ummantelung (120).

## Claims

1. A mixer assembly (100) for mixing two air streams in a ventilation system (10), the mixer assembly (100) comprising:
a mixing chamber (110) comprising an inlet (111) and an outlet (112) and a mixing chamber wall (113) bounding the mixing chamber (110);
an enclosure (120) at least partially surrounding the mixing chamber wall (113), the enclosure (120) defining a space (121) between the mixing chamber wall (113) and the enclosure (120) and having one or more openings (122); and
a filter element (130) disposed adjacent to an outer surface of the enclosure (120) and covering one or more openings (122) of the enclosure (120),
the filter element (130) fluidically connecting the interstitial space (121) with a surrounding of the mixer assembly (100) by allowing fluid to flow through the filter element directly through said one or more openings into the interstitial space, and
wherein the intermediate space (121) is fluidically connected to the mixing chamber (110).

2. Mixer assembly (100) according to claim 1,
wherein the filter element (130) is detachably arranged on the mixer assembly (100).

3. Mixer assembly (100) according to claim 2,
the filter element (130) having, on a side facing the casing (120), a contour which corresponds at least in sections to a contour of an outer side of the casing (120).

4. Mixer assembly (100) according to one of the requirements 1 to 3,
also comprising:
a conveying means (140) adapted to convey a fluid through the filter element (130) into the interstitial space (121) and from the interstitial space (121) into the mixing chamber (110).

5. Mixer assembly (100) according to claim 4,
wherein the conveying device (140) is arranged in the intermediate space (121) and conveys the fluid through the mixing chamber wall (113) into the mixing chamber (110).

6. Mixer assembly (100) according to claim 4,
also comprising:
a premixer (150) fluidically coupled to the inlet (111) of the mixing chamber (110),
wherein the conveying device (140) conveys the fluid from the intermediate space (120) into the premixer (150).

7. Mixer assembly (100) according to any one of claims 1 to 6,
also comprising:
a fresh air supply line (160) fluidically coupled to the inlet (111) of the mixing chamber (110).

8. A storage compartment (200) in a vehicle (11), the storage compartment (200) comprising
- a mixer assembly (100) according to any one of claims 1 to 7.

9. Storage compartment (200) according to claim 8,
also comprising:
- a partition wall (210) separating the stowage space (200) containing the mixer assembly (100) from a cargo space (220) and having at least one filter installation opening (211),
wherein the filter element (130) is adapted to be pushed through the filter installation opening (211) and, in an end position, fluidically connect the intermediate space (121) with the surroundings of the mixer assembly (100) and fluidically seal the filter installation opening (211).

10. Storage compartment (200) according to claim 9,
also comprising:
- a closure element (135) adapted to fluidically seal the filter installation opening (211).

11. Storage compartment (200) according to claim 10,
wherein the closing member (135) has a shape corresponding to a shape of the filter installation opening (211) or completely covers the filter installation opening (211).

12. An aircraft (11) having a stowage space (200) corresponding to one of claims 8 to 11.

13. A method of manufacturing a mixer assembly (100) in an aircraft (11),
wherein the procedure comprises:
providing (310) a mixing chamber (110) comprising a mixing chamber wall (113) defining the mixing chamber (110):
attaching (320) an enclosure (120) which surrounds the mixing chamber wall (113) at least in sections, delimits an interspace (121) between the mixing chamber wall (113) and the enclosure (120) and has one or more openings (122), the interspace (121) being fluidically connected to the mixing chamber (110);
attaching (330) a filter element (130) to an outer side of the jacket (120), wherein the filter element (130) covers the one or more openings (122) of the enclosure (120) and fluidically connects the interstitial space (121) with an environment of the mixer assembly (100) by allowing fluid to flow through the filter element directly through said one or more openings into the interstitial space, and;
inserting (340) the mixer assembly (100) with the shroud (120) and filter element (130) attached into a stowage compartment (200) of the aircraft (11); and securing (350) the mixer assembly (100) in the stowage compartment (200).

14. Method according to claim 13,
also comprising:
removing (360) the filter element (130) from the mixer assembly (100); and
fitting (331) a new filter element (130) on the outside of the sheathing (120).

## Revendications

1. Un ensemble mélangeur (100) pour mélanger deux flux d'air dans un système de ventilation (10), l'ensemble mélangeur (100) comprenant
une chambre de mélange (110) comprenant une entrée (111) et une sortie (112) et une paroi de chambre de mélange (113) délimitant la chambre de mélange (110) ;
une enceinte (120) entourant au moins partiellement la paroi de la chambre de mélange (113), l'enceinte (120) définissant un espace (121) entre la paroi de la chambre de mélange (113) et l'enceinte (120) et comportant une ou plusieurs ouvertures (122) ; et
un élément filtrant (130) disposé à proximité d'une surface extérieure de l'enceinte (120) et couvrant une ou plusieurs ouvertures (122) de l'enceinte (120), dans lequel l'élément de filtre (130) relie fluidiquement l'espace interstitiel (121) à un environnement de l'ensemble de mélange (100) en permettant au fluide de s'écouler à travers l'élément de filtre directement à travers ladite une ou plusieurs ouvertures dans l'espace interstitiel, et
où l'espace intermédiaire (121) est en liaison fluide avec la chambre de mélange (110).

2. Ensemble de mélangeurs (100) selon la revendication 1,
dans lequel l'élément filtrant (130) est disposé de manière amovible sur l'ensemble du mélangeur (I00).

3. Ensemble de mélangeurs (100) selon la revendication 2,
l'élément filtrant (130) ayant, sur un côté faisant face au boîtier (120), un contour qui correspond au moins en partie à un contour d'un côté extérieur du boîtier (120).

4. Ensemble de mélangeurs (100) selon l'une des exigences 1 à 3,
également complet :
un moyen de transport (140) adapté pour transporter un fluide à travers l'élément filtrant (130) dans l'espace interstitiel (121) et de l'espace interstitiel (121) dans la chambre de mélange (110).

5. Ensemble de mélangeurs (100) selon la revendication 4,
dans lequel le dispositif de transport (140) est disposé dans l'espace intermédiaire (121) et transporte le fluide à travers la paroi de la chambre de mélange (113) dans la chambre de mélange (110).

6. Ensemble de mélangeurs (100) selon la revendication 4,
également complet :
un prémélangeur (150) couplé fluidiquement à l'entrée (111) de la chambre de mélange (110),
dans lequel le dispositif de transport (140) transporte le fluide de l'espace intermédiaire (120) dans le prémélangeur (150).

7. Ensemble de mélangeurs (100) selon l'une des revendications 1 à 6,
également complet :
une conduite d'alimentation en air frais (160) couplée fluidiquement à l'entrée (111) de la chambre de mélange (110).

8. Chambre de stockage (200) dans un véhicule (11), dans laquelle la chambre de stockage (200) comprend :
un ensemble mélangeur (100) selon l'une des revendications 1 à 7.

9. Chambre de stockage (200) selon la revendication 8,
également complet :
une paroi de séparation (210) séparant l'espace de rangement (200) contenant l'ensemble de mélange (100) d'un espace de chargement (220) et comportant au moins une ouverture pour l'installation de filtres (211),
dans lequel l'élément filtrant (130) est adapté pour être poussé à travers l'ouverture d'installation du filtre (211) et, dans une position finale, relier fluidiquement l'espace intermédiaire (121) avec l'environnement de l'ensemble de mélange (100) et sceller fluidiquement l'ouverture d'installation du filtre (211).

10. Chambre de stockage (200) selon la revendication 9,
également complet :
un élément de fermeture (135) adapté pour sceller de manière fluide l'ouverture d'installation du filtre (211).

11. Chambre de stockage (200) selon la revendication 10,
dans lequel l'élément de fermeture (135) a une forme correspondant à la forme de l'ouverture de l'installation de filtrage (211) ou recouvre complètement l'ouverture de l'installation de filtrage (211).

12. Aéronef (11) ayant un espace de rangement (200) correspondant à l'une des revendications 8 à 11.

13. Méthode de fabrication d'un ensemble mélangeur (100) dans un avion (11),
où le processus comprend :
prévoir (310) une chambre de mélange (110) comprenant une paroi de chambre de mélange (113) définissant la chambre de mélange (110) :
fixer (320) une enceinte (120) qui entoure la paroi de la chambre de mélange (113) au moins par sections, délimite un espace intermédiaire (121) entre la paroi de la chambre de mélange (113) et l'enceinte (120) et présente une ou plusieurs ouvertures (122), l'espace intermédiaire (121) étant en liaison fluidique avec la chambre de mélange (110) ;
en fixant (330) un élément filtrant (130) sur un côté extérieur de l'enveloppe (120),
dans lequel l'élément de filtre (130) couvre l'une ou plusieurs des ouvertures (122) de l'enceinte (120) et relie fluidiquement l'espace interstitiel (121) à un environnement de l'ensemble de mélange (100) en permettant au fluide de s'écouler à travers l'élément de filtre directement à travers ladite une ou plusieurs ouvertures dans l'espace interstitiel, et ;
l'insertion (340) de l'ensemble de mélange (100) avec l'enveloppe (120) et l'élément filtrant (130) fixé dans un compartiment de rangement (200) de l'avion (11);
et la fixation (350) de l'ensemble de mélange (100) dans le compartiment de rangement (200).

14. Méthode selon la revendication 13,
plus complet :
retirer (360) l'élément filtrant (130) de l'ensemble de mélange (100),
fixez (331) un nouvel élément filtrant (130) à l'extérieur de la gaine (120).
